# EUROPÄISCHE PATENTSCHRIFT

(11) **EP 2 954 333 B1**
(45) Veröffentlichungstag und Bekanntmachung des Hinweises auf die Patenterteilung: **11.01.2017**
(21) Anmeldenummer: 14705469.6
(22) Anmeldetag: 06.02.2014
(51) Int. Cl.: G01P 1/02, B23K 11/00, G01P 15/08, G01P 15/09

(54) **VERFAHREN ZUR HERSTELLUNG EINES BESCHLEUNIGUNGSSENSORS**
METHOD FOR PRODUCING AN ACCELERATION SENSOR
PROCÉDÉ DE FABRICATION D'UN CAPTEUR D'ACCÉLÉRATION

(30) Priorität: 07.02.2013 CH 411132013; 13.03.2013 CH 594132013
(43) Veröffentlichungstag der Anmeldung: 16.12.2015
(73) Patentinhaber: Kistler Holding AG, 8408 Winterthur (CH)
(72) Erfinder: SONDEREGGER, Christof, CH-8413 Neftenbach (CH); TACK, Peter Charles, Lancaster, New York 14086 (US)
(86) Internationale Anmeldenummer: PCT/CH2014/000015
(87) Internationale Veröffentlichungsnummer: WO 2014/121407

(56) Entgegenhaltungen:
- GB-A- 1 393 312
- US-A- 5 224 380
- US-A1- 2004 144 758
- US-A1- 2005 193 801

## Beschreibung

Die Erfindung betrifft ein Verfahren zur Herstellung eines Beschleunigungssensors für die Anwendung in Maschinen, Anlagen, Fahrzeugen oder Flugzeugen, wobei der fertig gestellte Beschleunigungssensor ein in seiner Grundform zylinderförmiges oder kubisches Gehäuse mit mindestens einer innenliegenden Abstützung mit einem darauf angeordneten Sensorelement umfasst.

Sie betrifft weiterhin einen derartigen Beschleunigungssensor, insbesondere einen Beschleunigungssensor zur Messung von Beschleunigungswerten in einer oder in drei Achsen.

Druck- oder Kraftsensoren sind oft gleichzeitig verschiedenen Kräften oder Momenten in unterschiedlichen Achsrichtungen ausgesetzt und je nach Anwendungsfall sollen mehrere Komponenten gemessen werden. Dabei muss jede Kraftkomponente unabhängig von anderen Kräften oder Momenten erfassbar sein. Hierzu umfasst ein Sensor je nach Bedarf mehrere Messkörper mit einem oder mehreren Messelementen.

Beschleunigungssensoren sind bekannt und gelangen in diversen Anwendungsgebieten zum Einsatz. Sie dürfen nur eine geringe Grösse und Eigengewicht aufweisen, was insbesondere bei triaxial wirkenden Sensoren zu einer aufwändigen Fertigung und entsprechenden Lieferfristen führen kann. So werden auf geringem Raum Aufnahmekammern in ein Sensorgehäuse gefräst, das zudem noch Gewindebohrungen für die Befestigung des Beschleunigungssensors auf einem Substrat resp. einer Basis aufnehmen muss und die Sensorelemente müssen in eine seismische Masse eingebettet werden und auf engstem Raum eingebaut werden. Infolge der Forderung nach immer kleineren Sensoren können die empfindlichen Sensorelemente auf dieser Basis nicht vorgefertigt und eingebaut werden.

### Kurze Beschreibung der Erfindung

Der Erfindung liegt daher die Aufgabe zugrunde, ein eingangs beschriebenes Verfahren zur Herstellung eines Beschleunigungssensors zu schaffen, das eine einfachere und flexible Fertigung derartiger Sensoren ermöglicht.

Die Aufgabe ist mit den Merkmalen des Patentanspruchs 1 gelöst.

Die Erfindung betrifft ein Verfahren zur Herstellung eines Beschleunigungssensors mit einem in seiner Grundform zylinderförmigen oder kubischen Gehäuse mit mindestens einer innenliegenden Abstützung und mit einem darauf angeordneten Sensorelement. Erfindungsgemäss wird ein Sensorelement umfassend einen Grundkörper mit Kopfteil und diesem gegenüberliegender Stirnfläche vormontiert, indem das Kopfteil mit mindestens einem piezoelektrischen Messelement sowie mit einer seismischen Masse und einem Spannring umgeben wird, wobei der Spannring und seismische Masse in einem Körper mit kombinierten Eigenschaften ausgestaltet sein kann. Anschliessend wird die Stirnfläche berührend an die innere Abstützung des Gehäuses zur Bildung einer Kontaktzone zwischen Stirnfläche und Abstützung positioniert. Schliesslich wird das Sensorelement in dieser Kontaktzone mit dem Gehäuse verschweisst.

Die Erfindung betrifft auch einen Beschleunigungssensor zur Messung von Beschleunigungswerten in einer oder drei Achsen, wobei der Beschleunigungssensor ein in seiner Grundform im Wesentlichen zylinderförmiges oder kubisches Gehäuse mit von aussen zugänglichen, innenliegenden Abstützungen und darauf angeordneten Sensorelementen umfasst, die einen Grundkörper (20) aufweisen. Erfindungsgemäss ist jeder Grundkörper jedes Sensorelements mit einer Stirnfläche an einer der innenliegenden Abstützungen an einer Kontaktzone mittels einer Verschweissung stoffschlüssig angeordnet.

### Ausführliche Beschreibung der Erfindung

In einem ersten Schritt des erfindungsgemässen Verfahrens wird das Sensorelement vormontiert durch Umgeben eines Kopfteils eines Grundkörpers mit mindestens einem piezoelektrischen Messelement und anschliessend durch Umschliessen von Grundkörper und Messelement mit einer seismischen Masse und mit einem Spannring. Spannring und seismische Masse können in einem Körper mit kombinierten Eigenschaften ausgestaltet sein. Bevorzugt weist der Beschleunigungssensor drei piezoelektrische Messelemente auf, die um den Grundkörper verteilt angeordnet und gemeinsam von der seismischen Masse und dem Spannring umschlossen sind. Der Beschleunigungssensor kann aber auch nur ein Messelement beinhalten.

In einem zweiten Schritt wird eine dem Kopfteil gegenüberliegenden Stirnfläche des Grundkörpers berührend an eine Abstützung des Gehäuses positioniert zur Bildung einer Kontaktzone zwischen Stirnfläche und Abstützung.

Nachfolgend wird schliesslich das vormontierte Sensorelement mit seiner Stirnfläche an der Abstützung des Gehäuses zur Ausbildung einer stoffschlüssigen Verbindung an der Kontaktzone verschweisst.

In einer bevorzugten Verfahrensform wird dazu eine Schweisselektrode mit definierter Kraft auf dem Kopfteil des Sensorelements aufgesetzt, wobei die Schweisselektrode mit einer Anlage für ein Widerstandsschweissen verbunden ist. Durch Anlegen einer definierten Schweissspannung zwischen der Schweisselektrode und einer Gegenelektrode am Gehäuse wird ein Stromfluss durch den Grundkörper mit Kopfteil und das Gehäuse erzeugt, der ein zumindest teilweises Schmelzen der Stirnfläche und der Abstützung in der Kontaktzone bewirkt, so dass eine ringförmige, stoffschlüssige Verbindung hergestellt wird.

Im Ergebnis wird eine präzise und plan ausgerichtete Verbindung erreicht, die schnell herstellbar ist und auch eine weitere Flächenreduktion ermöglicht. Umgebende Bereiche der Abstützung oder des Gehäuses werden nicht beeinträchtigt, da durch die geringe Energie nur eine sehr geringe Temperaturerhöhung resultiert.

Eine weitere Aufgabe besteht in der Bereitstellung eines Beschleunigungssensors, insbesondere eines Beschleunigungssensor zur Messung von Beschleunigungswerten in einer oder in drei Achsen, der einen modularen Aufbau aufweist.

Diese Aufgabe ist mit den Merkmalen des Patentanspruchs 9 gelöst. Der erfindungsgemässe Beschleunigungssensor umfasst ein in seiner Grundform im Wesentlichen zylinderförmiges oder kubisches Gehäuse mit von aussen zugänglichen, innenliegenden Abstützungen und darauf angeordneten Sensorelementen, die einen Grundkörper aufweisen. Erfindungsgemäss ist jeder Grundkörper jedes Sensorelements mit einer Stirnfläche an einer der innenliegenden Abstützungen an einer Kontaktzone mittels einer Verschweissung stoffschlüssig angeordnet. Diese Verschweissung erfolgt bevorzugt durch Widerstandsschweissung.

Der modulare Aufbau ermöglicht den Einsatz unterschiedlicher Sensorelemente für unterschiedliche Messbereiche in einem Gehäuse in nur einer Baugrösse. Das Gehäuse soll möglichst klein sein, damit der Anwendungs- und Einsatzbereich möglichst flexibel gehalten werden kann.

Das erfindungsgemässe Herstellungsverfahren ermöglicht eine einfache und serienmässige Vorfertigung und Lagerhaltung von Sensorelementen und deren schnelle, präzise und kostengünstige Montage im Sensorgehäuse. So werden die Durchlaufzeiten kurz gehalten, wodurch eine kurzfristige Bereitstellung von Beschleunigungssensoren ermöglicht wird.

Die Erfindung wird nachfolgend in einem Ausführungsbeispiel anhand einer Zeichnung näher beschrieben. In der Zeichnung zeigen die
- Fig. 1:: ein Gehäuse eines Beschleunigungssensors bisheriger Bauart ohne montierte Sensorelemente (1a) und einen erfindungsgemässen Beschleunigungssensor (1b);
- Fig. 2:: ein erfindungsgemässes, vormontiertes Sensorelement;
- Fig. 3:: ein Gehäuse mit Angabe der Zuführrichtungen der vormontierten Sensorelemente;
- Fig. 4:: eine Anordnung zur Herstellung eines Beschleunigungssensors.

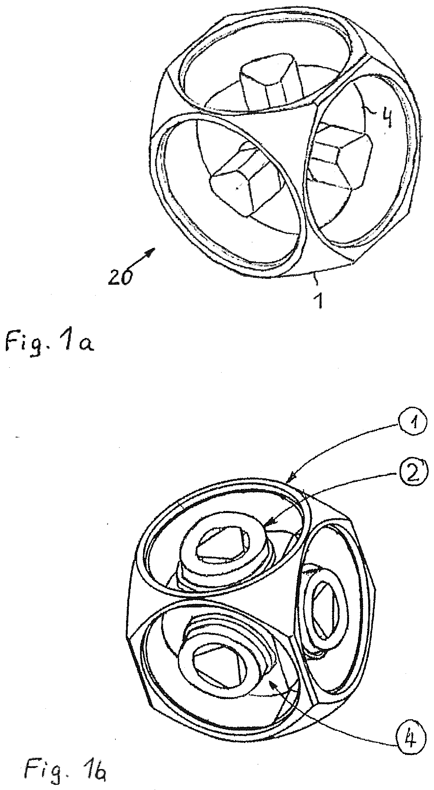

Die Fig. 1a zeigt ein Gehäuse eines Beschleunigungssensors nach dem Stand der Technik, der aus einem Stück gefräst ist. Dargestellt sind drei in einem kubischen Gehäuse 1 angeordnete Grundkörper 20 ohne Sensorelemente, die ebenfalls mit ausgefräst wurden.

Jedes Sensorelement 2 wird erst im Gehäuse 1 vollständig montiert, was beim sichtbar kleinen Innenraum des Gehäuses 1 schwierig und zeitraubend ist. Es ist dabei absehbar, dass die Gehäuse zukünftig noch kleiner werden, weshalb sich auch das Fräsen schwieriger gestalten wird.

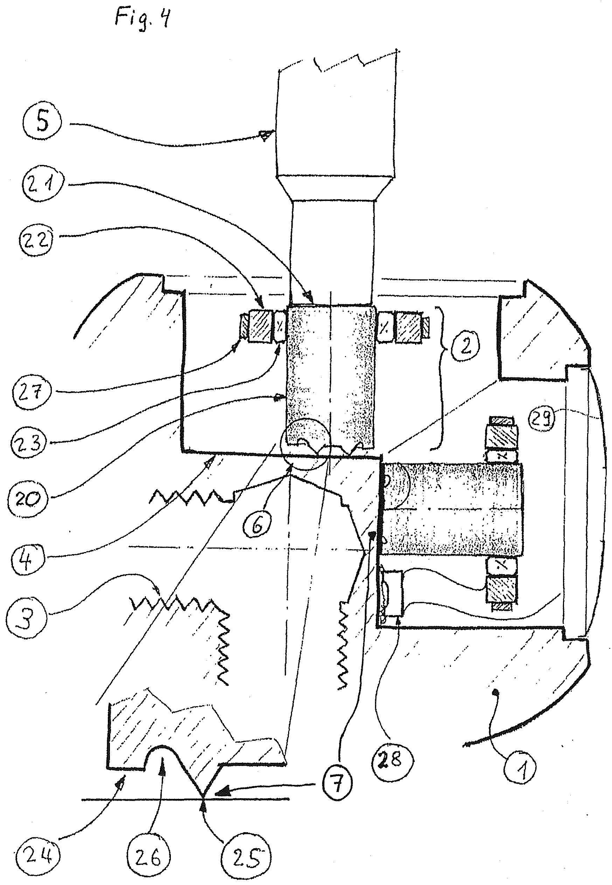

Aus Fig. 4 geht hervor, dass aussen am Gehäuse 1 Montagegewinde 3 zur Anbringung des Beschleunigungssensors angeordnet sind. Dadurch sind die den Montagegewinden 3 gegenüber liegende Abstützungen 4 zur Aufnahme der Sensorelemente 2 nicht vergrösserbar. Problematisch ist die Wandstärke in diesem Bereich, die sehr gering ausfällt. Daher können die Sensorelemente 2 nicht in das Gehäuse 1 eingeschraubt werden, weil für eine Gewindebohrung die Wandstärke zu gering ist.

Die innenliegenden Abstützungen 4 ermöglichen aber im Vergleich zu einer aussenliegenden Anordnung eine geringere Baugrösse des Gehäuses 1 und eine geschützte Anordnung von Sensorelement 2, Messelektronik und Verdrahtung.

Erfindungsgemäss besteht das Gehäuse 1 des Beschleunigungssensors aus einem Titan- oder Aluminiumwerkstoff.

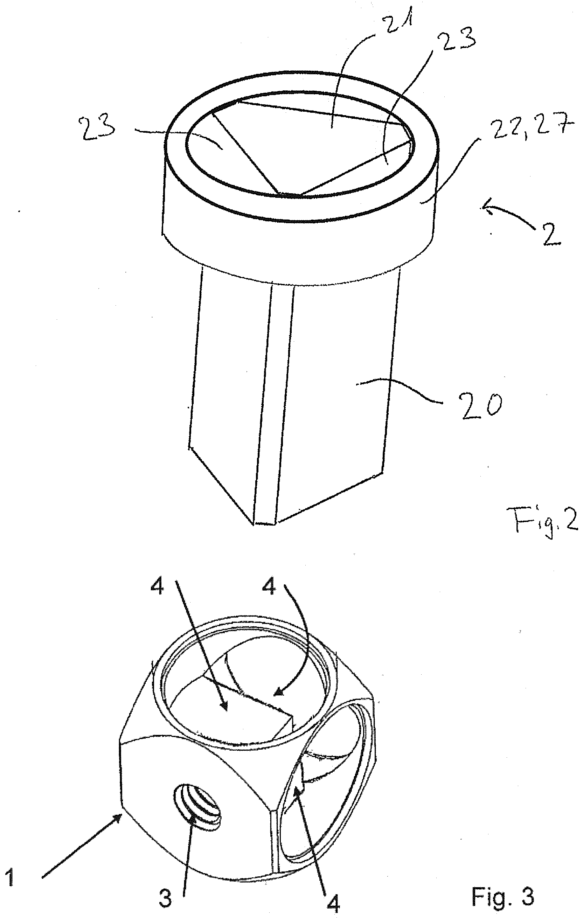

Das Sensorelement 2 (Fig. 2) selbst umfasst vorzugsweise einen Grundkörper 20 aus Titan oder Stahl, um eine hohe Steifigkeit zu gewährleisten. Der Grundkörper 20 ist mit einem vorzugsweise runden oder polygonförmigen Kopfteil 21 versehen, das von einer seismischen Masse 22 umgeben wird, die wiederum von einem Spannring 27, vorzugsweise in Form eines Schrumpfrings, umschlossen wird. Spannring 27 und seismische Masse 22 können in einem Körper mit kombinierten Eigenschaften ausgestaltet sein. In den bogenförmigen Ausnehmungen zwischen seismischer Masse 22 und Kopfteil 21 sind eines oder mehrere piezoelektrische Elemente 23 angeordnet. Eine auf der Abstützung 4 zu platzierende und vom Kopfteil 21 abgewandte Stirnfläche 24 des Grundkörpers 20 ist vorzugsweise mit einer ringförmigen Erhebung 25 versehen, die nach aussen von einer Nut 26 umgeben ist. Eine aussen angeordnete Nut 26 ermöglicht bei kleinen Durchmessern des Grundkörpers 20 ein grösseres Volumen zur vollständigen Aufnahme von Schmelze und somit eine qualitativ gute Verbindung.

Das Sensorelement 2 kann stiftförmig ausgestaltet sein. Als Stift im Sinne der Erfindung gilt ein Sensorelement 2 oben beschriebener Art mit einer Achse quer zur Stirnfläche 24, das einen axialen Abstand aufweist zwischen der Stirnfläche 24 und jedem piezoelektrischen Element 23, der seismischen Masse 22 sowie dem Spannring 27. Die Achse entspricht jeweils einer der zu messenden Sensorachsen.

Zur Montage eines wie vorbeschrieben vormontierten Sensorelements 2 im Gehäuse 1 wird wie vorgenannt ein Sensorelement 2 mit der Stirnfläche 24 parallel zur Fügefläche 6 der Abstützung 4 positioniert (Fig. 4), wobei nur die Spitzen der Erhebung 25 die Fügefläche 6 berühren und dabei eine leitfähige Kontaktzone 7 bilden.

Nachfolgend wird eine Schweisselektrode 5 mit definierter Kraft leitfähig auf dem Kopfteil 21 aufgesetzt, wobei die Schweisselektrode 5 mit einer nicht dargestellten Anlage für ein Widerstandsschweissen verbunden ist. Durch Anlegen einer definierten Schweissspannung wird ein Stromfluss durch die Schweisselektrode 5, den Grundkörper 20 mit Kopfteil 21 und das Gehäuse 1 sowie eine Gegenelektrode erzeugt, der ein zumindest teilweises schmelzen der Erhebung 25 und entsprechender Bereiche der Fügefläche 6 in der Kontaktzone 7 bewirkt, so dass zumindest eine ringförmige, stoffschlüssige Verbindung hergestellt wird. Eventuell überschüssige Schmelze kann in die Nut 26 fliessen. Im Ergebnis wird eine präzise und plan ausgerichtete Verbindung erreicht, die schnell herstellbar ist und auch eine weitere Flächenreduktion ermöglicht.

Anstelle einer Widerstandsschweissung könnte die Verbindung auch mittels Reibschweissen, Induktionslöten oder Laserschweissen hergestellt werden.

Umgebende Bereiche der Abstützung 4 oder des Gehäuses 1 allgemein werden durch die Verschweissung nicht beeinträchtigt.

Analog werden bei einem Beschleunigungssensor zur Messung von Beschleunigungen in drei Achsen die anderen zwei Sensorelemente 2 im Gehäuse 1 angeordnet, wobei das Gehäuse 1 entsprechend neu in der Einrichtung fixiert wird.

Auf der Abstützung 4 oder auf dem Kopfteil 21 kann auch die Messelektronik 28 angeordnet werden. Nach Einbringung der Sensorelemente 2 werden diese mit der Messelektronik 28 sowie einem nicht dargestellten Stecker verdrahtet. Der Stecker sitzt auf einem Deckel 29, der Sensorelement 2 und Abstützung 4 abdeckt.

Das Gehäuse 1 des erfindungsgemässen Beschleunigungssensors mit den Abstützungen 4 besteht bevorzugt aus einem Titan- oder Aluminiumwerkstoff, während der Grundkörper 20 des Sensorelements 2 bevorzugt aus Titan oder Stahl besteht.

Der Draht zum Stecker wird durch die Steckeröffnung gezogen, danach der Deckel 29 bevorzugt eingeklickt, der Draht mit dem Stecker verbunden und abschliessend der Stecker in die Deckelöffnung gefügt.

### Liste der Bezugszeichen

- 1: Gehäuse
- 2: Sensorelement
- 3: Montagegewinde
- 4: Abstützung
- 5: Schweisselektrode
- 6: Fügefläche
- 7: Kontaktzone
- 20: Grundkörper
- 21: Kopfteil
- 22: seismische Masse
- 23: piezoelektrisches Messelement
- 24: Stirnfläche
- 25: Erhebung
- 26: Nut
- 27: Spannring
- 28: Messelektronik
- 29: Deckel

## Patentansprüche

1. Verfahren zur Herstellung eines Beschleunigungssensors für die Anwendung in Maschinen, Anlagen, Fahrzeugen oder Flugzeugen, wobei der fertig gestellte Beschleunigungssensor ein in seiner Grundform zylinderförmiges oder kubisches Gehäuse (1) mit mindestens einer innenliegenden Abstützung (4) mit einem darauf angeordneten Sensorelement (2) umfasst,
**gekennzeichnet durch** die Verfahrensschritte
a) Vormontieren eines Sensorelements (2) **durch** Umgeben eines Kopfteils (21) eines Grundkörpers (20) mit mindestens einem piezoelektrischen Messelement (23), und Umschliessen mit einer seismischen Masse (22) und einem Spannring (27),
b) Positionierung einer dem Kopfteil (21) gegenüberliegenden Stirnfläche (24) des Grundkörpers (20) des vormontierten Sensorelements (2) berührend an eine Abstützung (4) des Gehäuses (1) zur Bildung einer Kontaktzone (7) zwischen Stirnfläche (24) und Abstützung (4),
c) Verschweissung des vormontierten Sensorelements (2) mit seiner Stirnfläche (24) an der Abstützung (4) des Gehäuses (1) zur Ausbildung einer stoffschlüssigen Verbindung an der Kontaktzone (7).

2. Verfahren nach Anspruch 1, **dadurch gekennzeichnet, dass** die Verschweissung durch Widerstandsschweissung zu Stande kommt, indem eine Schweisselektrode (5) mit den Kopfteil (21) des Sensorelements (2) und eine Gegenelektrode am Gehäuse (1) kontaktiert werden, und anschliessend eine definierte Spannung zur Erzeugung eines Stromflusses zwischen Elektrode (5), Sensorelement (2), Gehäuse (1) und Gegenelektrode angelegt wird, zur Ausbildung der stoffschlüssigen Verbindung an der Kontaktzone (7).

3. Verfahren nach Anspruch 2, **dadurch gekennzeichnet, dass** dir Schweisselektrode (5) für die Widerstandsschweissung mit einer definierten Kraft auf das Kopfteil (21) des Sensorelements (2) aufgesetzt wird.

4. Verfahren nach Anspruch 1, **dadurch gekennzeichnet, dass** die Verschweissung durch Reibschweissen zustande kommt.

5. Verfahren nach einem der vorhergehenden Ansprüche, **dadurch gekennzeichnet, dass** eine Messelektronik (28) auf der Abstützung (4) oder auf dem Kopfteil (21) angebracht wird.

6. Verfahren nach einem der vorhergehenden Ansprüche, **dadurch gekennzeichnet, dass** drei Abstützungen (4) im Gehäuse (1) vorgesehen sind und mit je einem Sensorelement (2) stoffschlüssig verbunden werden.

7. Verfahren nach einem der vorhergehenden Ansprüche, **dadurch gekennzeichnet, dass** im Anschluss an den Verfahrensschritt c) ein Verschliessen des Gehäuses (1) über den Sensorelementen (2) gegen aussen und eine Kontaktierung der piezoelektrischen Messelemente (23) mit einem Anschlussstecker erfolgt.

8. Verfahren nach einem der vorhergehenden Ansprüche, **dadurch gekennzeichnet, dass** im Schritt b) Spitzen einer ringförmigen Erhebung (25) der Stirnfläche (24) des Grundkörpers (20) des Sensorelements (2) eine Fügefläche (6) auf der Abstützung (4), die Kontaktzone bildend berühren.

9. Beschleunigungssensor zur Messung von Beschleunigungswerten in einer oder drei Achsen, wobei der Beschleunigungssensor ein in seiner Grundform im Wesentlichen zylinderförmiges oder kubisches Gehäuse (1) mit von aussen zugänglichen, innenliegenden Abstützungen (4) und darauf angeordneten Sensorelementen (2) umfasst, die einen Grundkörper (20) aufweisen, **dadurch gekennzeichnet, dass** jeder Grundkörper (20) jedes Sensorelements (2) mit einer Stirnfläche (24) an einer der innenliegenden Abstützungen (4) an einer Kontaktzone (7) mittels einer Verschweissung stoffschlüssig angeordnet ist.

10. Beschleunigungssensor nach Anspruch 9, **dadurch gekennzeichnet, dass** das Gehäuse (1) mit den Abstützungen (4) aus einem Titan- oder Aluminiumwerkstoff besteht.

11. Beschleunigungssensor nach Anspruch 9 oder 10, **dadurch gekennzeichnet, dass** der Grundkörper (20) des Sensorelements (2) aus Titan oder Stahl besteht.

12. Beschleunigungssensor nach einem der Ansprüche 9 bis 11, **dadurch gekennzeichnet, dass** der Grundkörper (20) jedes Sensorelements (2) an einem der Stirnfläche gegenüberliegenden Kopfteil (21) mit mindestens einem piezoelektrischen Messelement (23) umgeben und beides mit einer seismischen Masse (22) und einem Spannring (27) umschlossen ist.

13. Beschleunigungssensor nach einem der Ansprüche 9 bis 12, **dadurch gekennzeichnet, dass** jedes Sensorelement (2) stiftförmig ausgestaltet ist, indem das Sensorelement (2) eine Achse quer zur Stirnfläche (24) aufweist und die Stirnfläche (24) axial beabstandet ist von jedem piezoelektrischen Element (23) sowie von der seismischen Masse (22) und dem Spannring (27).

## Claims

1. A method for producing an acceleration sensor for use in machines, systems, vehicles or aircraft, wherein the finished acceleration sensor comprises a housing (1), which is cylindrical or cubic in terms of its basic shape, with at least one internal support (4) with a sensor element (2) arranged thereon,
**characterised by** the method steps
a) pre-installing a sensor element (2) by encompassing a head part (21) of a base body (20) with at least one piezoelectric measuring element (23), and enclosing with a seismic mass (22) and a clamping ring (27),
b) positioning an end face (24) of the base body (20) of the pre-installed sensor element (2), which end face is opposite the head part (21), contacting a support (4) of the housing (1) for forming a contact zone (7) between end face (24) and support (4),
c) welding the end face (24) of the pre-installed sensor element (2) on the support (4) of the housing (1) for constructing a materially-bonded connection at the contact zone (7).

2. The method according to Claim 1, **characterised in that** the welding comes about by resistance welding, **in that** a welding electrode (5) with the head part (21) of the sensor element (2) and a counter electrode on the housing (1) are contacted, and subsequently a defined voltage for generating a current flow between electrode (5), sensor element (2), housing (1) and counter electrode is applied for constructing the materially-bonded connection at the contact zone (7).

3. The method according to Claim 2, **characterised in that** the welding electrode (5) for the resistance welding is applied onto the head part (21) of the sensor element (2) with a defined force.

4. The method according to Claim 1, **characterised in that** the welding comes about by friction welding.

5. The method according to one of the preceding claims, **characterised in that** measuring electronics (28) are attached on the support (4) or on the head part (21).

6. The method according to one of the preceding claims, **characterised in that** three supports (4) are provided in the housing (1) and are connected in a materially-bonded manner to one sensor element (2) in each case.

7. The method according to one of the preceding claims, **characterised in that** subsequently to the method step c), a closure of the housing (1) above the sensor elements (2) with respect to the outside and a contacting of the piezoelectric measuring elements (23) using a connector plug takes place.

8. The method according to one of the preceding claims, **characterised in that** in step b), tips of an annular elevation (25) of the end face (24) of the base body (20) of the sensor element (2) contact a jointing surface (6) on the support (4), forming the contact zone.

9. An acceleration sensor for measuring acceleration values in one or three axes, wherein the acceleration sensor comprises a housing (1), which is essentially cylindrical or cubic in terms of its basic shape, with internal supports (4), which are accessible from outside, and sensor elements (2) arranged thereon, which comprise a base body (20), **characterised in that** an end face (24) of each base body (20) of each sensor element (2) is arranged in a materially-bonded manner on one of the internal supports (4) at a contact zone (7) by means of welding.

10. The acceleration sensor according to Claim 9, **characterised in that** the housing (1) with the supports (4) consists of a titanium or aluminium material.

11. The acceleration sensor according to Claim 9 or 10, **characterised in that** the base body (20) of the sensor element (2) consists of titanium or steel.

12. The acceleration sensor according to one of Claims 9 to 11, **characterised in that** the base body (20) of each sensor element (2) is encompassed at a head part (21) opposite the end face with at least one piezoelectric measuring element (23) and both are enclosed with a seismic mass (22) and a clamping ring (27).

13. The acceleration sensor according to one of Claims 9 to 12, **characterised in that** each sensor element (2) is configured in a pin-shaped manner, **in that** the sensor element (2) has an axis transverse to the end face (24) and the end face (24) is axially spaced from each piezoelectric element (23) and also from the seismic mass (22) and the clamping ring (27).

## Revendications

1. Un procédé de fabrication d'un capteur d'accélération pour son utilisation dans des machines, des équipements, des véhicules ou des aéronefs, ledit capteur d'accélération réalisé comprenant un boîtier (1), cylindrique ou cubique dans sa forme de base, doté d'au moins un support (4) situé à l'intérieur et d'un élément capteur (2) disposé sur ce dernier,
**caractérisé par** les étapes de procédé suivantes
a) le prémontage d'un élément capteur (2) en entourant une partie tête (21) d'un corps de base (20) d'au moins un élément de mesure piézo-électrique (23) et enfermement d'une masse sismique (22) et d'un anneau de serrage (27),
b) le positionnement d'une surface frontale (24) opposée à la partie tête (21) du corps de base (20) de l'élément capteur (2) prémonté en contact contre un support (4) du boîtier (1) pour former une zone de contact (7) entre ladite surface frontale (24) et ledit support (4),
c) le soudage de l'élément capteur (2) prémonté avec sa surface frontale (24) sur ledit support (4) du boîtier (1) pour fabriquer une liaison de matières dans cette zone de contact (7).

2. Le procédé selon la revendication 1, **caractérisé en ce que** ledit soudage est réalisé par soudage par résistance en mettant en contact une électrode de soudage (5) avec la partie tête (21) de l'élément capteur (2) et une contre-électrode sur le boitier (1) puis par l'application d'une tension définie pour générer une circulation du courant entre l'électrode (5), l'élément capteur (2), le boitier (1) et la contre-électrode pour former la liaison de matières dans ladite zone de contact (7).

3. Le procédé selon la revendication 2, **caractérisé en ce que** pour réaliser ledit soudage par résistance l'électrode de soudage (5) est appuyé sur la partie tête (21) de l'élément capteur (2) avec une force définie.

4. Le procédé selon la revendication 1, **caractérisé en ce que** ledit soudage est réalisé par soudage par friction.

5. Le procédé selon l'une quelconque des revendications précédentes, **caractérisé en ce qu'**un dispositif électronique de mesure (28) est monté sur le support (4) ou est monté sur la partie tête (21).

6. Le procédé selon l'une quelconque des revendications précédentes, **caractérisé en ce que** trois supports (4) sont prévus dans le boitier (1) et sont connectés chacun d'un seul tenant à un élément capteur (2) respectif.

7. Le procédé selon l'une quelconque des revendications précédentes, **caractérisé en ce que** l'étape de procédé c) est suivie par la fermeture du boitier (1) sur l'élément capteur (2) contre l'extérieur et par la mise au contact des éléments de mesure piézo-électriques (23) avec une fiche de connexion.

8. Le procédé selon l'une quelconque des revendications précédentes, **caractérisé en ce que** dans l'étape b) des pointes d'un épaulement annulaire (25) de la surface frontale (24) du corps de base (20) de l'élément capteur (2) touchent une surface de jonction (6) sur le support (4) en formant ladite zone de contact.

9. Un capteur d'accélération pour mesurer des valeurs d'accélération selon un ou plusieurs axes, ledit capteur d'accélération comprenant un boîtier (1), essentiellement cylindrique ou cubique dans sa forme de base doté des supports (4) situés à l'intérieur et accessibles de l'extérieur et des éléments capteurs (2) disposés sur ces derniers et chacun ayant un corps de base (20) **caractérisé en ce que** chacun corps de base (20) de chaque élément capteur (2) est arrangé avec une surface frontale (24) sur un desdits supports (4) situés à l'intérieur dans une zone de contact (7) par liaison de matières réalisée par soudage.

10. Un capteur d'accélération selon la revendication 9, **caractérisé en ce que** le boitier (1) avec les supports (4) est fabriqué d'un matériau à base de titane ou d'aluminium.

11. Un capteur d'accélération selon la revendication 9 ou 10, **caractérisé en ce que** le corps de base (20) de l'élément capteur (2) est fabriqué en titane ou en acier.

12. Un capteur d'accélération selon l'une des revendications 9 à 11, **caractérisé en ce que** le corps de base (20) de chaque élément capteur (2) est entouré à une partie tête (21) opposée à la surface frontale (24) d'au moins un élément de mesure piézo-électrique (23) et tous les deux sont enfermés d'une masse sismique (22) et d'un anneau de serrage (27).

13. Un capteur d'accélération selon l'une des revendications 9 à 12, **caractérisé en ce que** chaque élément capteur (2) est configuré en forme de broche en concevant l'élément capteur (2) avec un axe s'étendant transversalement à la surface frontale (24) et en espaçant la surface frontale (24) en direction axiale de chaque élément piézo-électrique (23) ainsi que de la masse sismique (22) et de l'anneau de serrage (27).
